(19) Europäisches Patentamt
European Patent Office
Office européen des brevets

(11) **EP 2 091 764 B1**

(12) **EUROPÄISCHE PATENTSCHRIFT**

(45) Veröffentlichungstag und Bekanntmachung des Hinweises auf die Patenterteilung:
**12.05.2010 Patentblatt 2010/19**

(21) Anmeldenummer: **07820335.3**

(22) Anmeldetag: **19.09.2007**

(51) Int Cl.:
**B60C 23/04** (2006.01)

(86) Internationale Anmeldenummer:
**PCT/EP2007/059891**

(87) Internationale Veröffentlichungsnummer:
**WO 2008/058790 (22.05.2008 Gazette 2008/21)**

(54) **ANORDNUNG ZUR ERKENNUNG EINER RADBEWEGUNG**

ARRANGEMENT FOR DETECTING A WHEEL MOVEMENT

SYSTÈME DE DÉTECTION DU MOUVEMENT D'UNE ROUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.11.2006 DE 102006054317**

(43) Veröffentlichungstag der Anmeldung:
**26.08.2009 Patentblatt 2009/35**

(73) Patentinhaber: **Robert Bosch GmbH**
**70442 Stuttgart (DE)**

(72) Erfinder:
• **NEUSCHELER, Marco**
**72768 Reutlingen (DE)**
• **WENZLER, Axel**
**71229 Leonberg (DE)**

(56) Entgegenhaltungen:
**DE-A1-102005 002 240 DE-B3-102004 042 191**
**US-A1- 2005 156 722**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren und eine Vorrichtung zur Erkennung einer Rollbewegung eines Rades bei einem Fahrzeug bzw. Kraftfahrzeug.

Reifendrucküberwachungssysteme sind bei modernen Kraftfahrzeugen bereits bekannt. Diese Überwachungssysteme umfassen in der Regel mehrere Drucksensoren, welche gemeinsam mit einer Sendeelektronik in den Rädern des Fahrzeugs angebracht sind. Im Falle eines Druckabfalls wird ein Funksignal an ein Steuergerät gesendet. Zur Überwachung des Sensorsystems wird in der Regel aber auch ohne Druckverlust zyklisch ein Signal gesendet. Der Drucksensor samt Signalauswertung und Sendeeinheit wird meist aus einer ebenfalls im Rad eingebauten Batterie gespeist.

Zur Funktionserweiterung des Sensors wird häufig eine Rollerkennung verwendet, d.h. eine Anordnung, welche erkennt, ob sich das Rad dreht oder nicht. Diese Funktion ist beispielsweise sinnvoll, um

- Energie zu sparen, d.h. der Sensor sendet nur im aktiven Betrieb,
- eine mögliche Beeinflussung anderer Systeme im eigenen oder in fremden Fahrzeugen im Stillstand zu vermeiden,
- ähnliches gilt, wenn das Rad nur als Ersatzrad im Fahrzeug mitgeführt wird.

Eine derartige Anordnung ist beispielsweise aus der DE 10 2005 002 240 A1 bekannt.

Aus dieser Schrift ist eine Vorrichtung zum Messen einer Fahrzeugbewegung bekannt. Diese umfasst einen an einem Rad angeordneten Beschleunigungssensor und eine zugehörige Auswerteschaltung. Diese Sensorik arbeitet besonders genau und zuverlässig, wenn der Beschleunigungssensor derart am Rad montiert ist, dass die Hauptsensierrichtung im wesentlichen in der Tangentialrichtung des Rades liegt.

Die Merkmale der Oberbegriffe der unabhängigen Ansprüche sind der DE 197 53 971 A1 entnommen.

Aus der US 2005/0156722 A1 ist ein Reifendrucksensor bekannt, der die Bewegung des Reifens detektiert. Hierzu werden in regelmäßigen Abständen Signale erfasst, die eine Bewegung des Reifens erkennen. Wird die Bewegung des Reifens durch ein erstes Signal erkannt, folgt eine Serie von zwei weiteren Signalen, um dieses erste Signal zu bestätigen.

Aus der DE 10 2004 042 191 B3 ist ein Reifenkontrollsystem bekannt, bei dem ein Beschleunigungssensor dazu benutzt wird, das Signal eines Reifendrucksensors dem richtigen Reifen zuzuordnen. Die Zuordnung bzw. die Lokalisierung des betreffenden Rades wird dabei über die Beschleunigungssignale des Sensors erreicht, die sich aus der unterschiedlichen Einbaulage ergeben. Zur Erfassung der Beschleunigungssignale wird das Signal des Sensors abgetastet. Die Abtastrate sowie die Pausen und der gesamte Erfassungszeitraum sind hierbei vordefiniert oder werden dynamisch an die jeweilige tatsächliche Fahrzeuggeschwindigkeit angepasst.

Offenbarung der Erfindung

Die Erfindung betrifft ein Verfahren zur Erkennung einer Rollbewegung eines Rades bei einem Kraftfahrzeug, bei dem

- mittels wenigstens eines Sensorelements eine eine Radbeschleunigung kennzeichnende Radbeschleunigungsgröße erfasst wird,
- die Radbeschleunigungsgröße zu verschiedenen Abtastzeitpunkten abgetastet wird und
- anhand der abgetasteten Werte das Vorliegen einer Rollbewegung detektiert wird.

Der Kern der Erfindung besteht darin, dass die Radbeschleunigungsgröße in einem wenigstens drei Abtastzeitpunkte umfassenden Zyklus bzw. Abtastzyklus bzw. Serie bzw. Abfolge bzw. Sequenz vorbestimmter, nichtäquidistanter Zeitpunkte abgetastet wird. Durch die Verwendung vorbestimmter nichtäquidistanter Abtastzeitpunkte eröffnet sich die Möglichkeit, mit einer ggü. einer äquidistanten Abtastung sehr viel geringeren Anzahl von Abtastzeitpunkten eine sichere Rollerkennung durchzuführen.

Die Erfindung ist **dadurch gekennzeichnet, dass**

- der innerhalb des Zyklus erfasste Maximalwert der durch Abtastung ermittelten Radbeschleunigungsgröße ermittelt wird,
- der innerhalb des Zyklus erfasste Minimalwert der durch Abtastung ermittelten Radbeschleunigungsgröße ermittelt wird,
- dass die Differenz zwischen dem Maximalwert und dem Minimalwert ermittelt wird und
- anhand der Differenz das Vorliegen einer Rollbewegung detektiert wird.

Eine vorteilhafte Ausgestaltung der Erfindung ist **dadurch gekennzeichnet, dass** es sich bei der Radbeschleunigungsgröße im wesentlichen um eine am Rad auftretende Radialbeschleunigung oder im wesentlichen um eine Tangentialbeschleunigung handelt.

Ein vorteilhafte Ausgestaltung der Erfindung ist **dadurch gekennzeichnet, dass** die Radbeschleunigungsgröße wenigstens einen auf eine Radialbeschleunigung zurückgehenden Anteil aufweist.

In den letztgenannten Ausführungen wird die Eigenschaft ausgenutzt, dass unabhängig von der Ausrichtung des Sensors, d.h. unabhängig davon, ob seine Messrichtung in radiale Richtung, tangentiale Richtung oder eine Linearkombination dieser Richtungen weist, stets ein sinusförmiges Ausgangssignal erzeugt wird, welchem abhängig von der Radialkomponente der Sensorausrichtung noch ein konstanter Offsetwert überlagert ist.

Eine vorteilhafte Ausgestaltung der Erfindung ist **dadurch gekennzeichnet, dass** die nichtäquidistanten Abtastzeitpunkte innerhalb des Zyklus zeitlich derart angeordnet sind, dass die zeitlich aufeinanderfolgenden Abstände zwischen zwei benachbarten Abtastzeitpunkten immer geringer werden. Diese Wahl der Abtastzeitpunkte hat sich in Versuchen als besonderes geeignet herausgestellt.

Eine vorteilhafte Ausgestaltung der Erfindung ist **dadurch gekennzeichnet, dass** eine Rollbewegung dann als vorliegend detektiert wird, wenn die Differenz einen vorgegebenen Schwellenwert überschreitet.

Eine vorteilhafte Ausgestaltung der Erfindung ist **dadurch gekennzeichnet, dass** der Abtastzyklus zu vorgegebenen Zeitpunkten wiederholt wird.

Eine vorteilhafte Ausgestaltung der Erfindung ist **dadurch gekennzeichnet,**

- **dass** das Verfahren im Rahmen eines Reifendrucküberwachungssystems eingesetzt wird und

- dass der Betriebsmodus des Reifendrucküberwachungssystems abhängig davon ist, ob eine Rollbewegung als vorliegend detektiert wurde.

Eine vorteilhafte Ausgestaltung **dadurch gekennzeichnet, dass** im Falle einer als nicht vorliegend detektierten Rollbewegung, d.h. es liegt keine Raddrehbewegung vor, die vom Reifendrucküberwachungssystem ermittelten Reifendruckwerte nicht oder mit größeren Zeitabständen als bei Vorliegen einer Raddrehbewegung gesendet werden. Dadurch wird ein energiesparender Betrieb des Reifendrucküberwachungssystems ermöglicht.

Eine vorteilhafte Ausgestaltung der Erfindung ist **dadurch gekennzeichnet, dass** es sich bei dem Sensorelement um ein piezokeramisches Sensorelement handelt.

Eine vorteilhafte Ausgestaltung der Erfindung ist **dadurch gekennzeichnet, dass** dem piezokeramischen Sensorelement ein Kondensator parallelgeschaltet ist.

Der Kondensator bildet gemeinsam mit dem Sensorelement und eventuell vorhandener weiterer Bauelemente eine passive Schaltung mit einem Frequenzverhalten (eine Art Bandpass), das wesentlich durch diese Kapazität mit bestimmt wird. Die Kapazität ermöglicht die Beobachtung der Sensorsignale und deren Auskopplung über die Schalter ohne dass dabei das Sensorelement kurz geschlossen wird. Es findet somit auch eine Art Impedanzwandlung statt; Piezo-Elemente sind extrem hochohmig.

Damit hat der Kondensator folgende Aufgaben:

- Frequenz- oder Filterverhalten auch ohne Bestromung der Anordnung

- Die Ladung auf dem Kondensator dient als Eingang für nachfolgende Q/U-Wandlung (Gain-Stufe)

- Der Kondensator ist notwendig um eine Art Impedanzwandlung durchzuführen; ohne den Kondensator treten beim Auslesen des Sensors sehr große Zeitkonstanten auf, die der Forderung, die Schaltung nur kurzzeitig mit Strom zu versorgen entgegenstehen.

Eine vorteilhafte Ausgestaltung der Erfindung ist **dadurch gekennzeichnet,**

- **dass** die Detektion des Vorliegens einer Rollbewegung mittels einer elektronischen Schaltung erfolgt und

- dass die elektronische Schaltung nur während der Abtastzeitpunkte mit Strom versorgt wird.

Damit wird ein energiesparender Betrieb ermöglicht.

Eine vorteilhafte Ausgestaltung der Erfindung ist **dadurch gekennzeichnet, dass** die elektronische Schaltung einen Ladungs-Spannungs-Wandler umfasst.

Eine vorteilhafte Ausgestaltung der Erfindung ist **dadurch gekennzeichnet, dass**

- eine Mindestgeschwindigkeit vorgegeben wird,

- die zu der Mindestgeschwindigkeit zugehörige Periodendauer einer Radumdrehung ermittelt wird und

- die zeitliche Länge des vorbestimmten, wenigstens drei Abtastpunkte umfassenden Zyklus gleich oder größer als die Periodendauer gewählt wird. Damit ist gewährleist, dass bei einer detektierten Rollbewegung die Abtastung sich zumindest über die Zeitdauer einer vollständigen Radumdrehung erstreckt. Dabei ist die Mindestgeschwindigkeit diejenige Geschwindigkeit, ab derer das Vorliegen einer Rollbewegung sicher detektiert werden soll.

Weiter umfasst die Erfindung eine Vorrichtung, enthaltend Mittel, die zur Durchführung der vorstehend beschriebenen Verfahren ausgestaltet sind.

Die Zeichnung umfasst die Figuren 1 bis 6.

Fig. 1 zeigt den sich im Rad befindenden Anteil eines Reifendrucküberwachungssystems.
Fig. 2 zeigt den typischen Verlauf der Beschleunigung bei einer Drehung des Rades.
Fig. 3 zeigt ein Signal am Sensorausgang mit nichtäquidistanter Abtastung.
Fig. 4 zeigt die Anordnung zur Erkennung der Rollbewegung.
Fig. 5 zeigt die Differenz zwischen ermittelten Maximal- und Minimalwerten, aufgetragen über der Drehfrequenz des Rades bzw. der Fahrzeuggeschwindigkeit.
Fig. 6 zeigt den prinzipiellen Ablauf des erfindungsgemäßen Verfahrens.

Die Erfindung ermöglicht die Rollerkennung eines Kfz-Rades, welche die folgenden Vorteile aufweist:

- geringer Stromverbrauch
- geringer Schaltungsaufwand
- im Rahmen einer integrierten Schaltung realisierbar
- sichere Unterscheidung der Zustände "rollend" oder "nichtrollend" für das Rad, wobei ein im Fahrzeug mitgeführtes Ersatzrad stets als nichtrollend detektiert werden muss
- Robustheit gegenüber Streuung und Alterung der verwendeten Komponenten sowie gegenüber dem Einbauort im Rad

Die Erfindung nutzt die Ausgangssignale eines Piezo-Elements. Mit Hilfe einer Schaltungsanordnung wird dieses Ausgangssignal zu bestimmten Abtastzeitpunkten abgetastet. Die Erfindung ermöglicht durch die erfindungsgemäße Wahl der Abtastzeitpunkte eine sichere Detektion einer vorliegenden Rollbewegung über einen großen Geschwindigkeitsbereich, z.B. von 20 km/h bis 250 km/h mit einer sehr geringen Anzahl an Abtastwerten. Die Anzahl an notwendigen Abtastwerten liegt typischerweise um einen Faktor 5 - 10 unter der Anzahl, welche bei einer äquidistanten Abtastung notwendig wären.

Die Schaltungsanordnung ist dabei so ausgelegt, dass sie nur während der Abtastzeitpunkte mit Strom versorgt werden muss, ansonsten kann sie sich in einem stromsparenden passiven Modus befinden. Aufgrund dieser energiesparenden Eigenschaft ist es möglich, mit den Abtastungen auch ohne hohen Energieverbrauch ein großes Zeitintervall abzudecken. Dieses große Zeitintervall ist notwendig, um auch Bewegungen mit geringen Geschwindigkeiten zu erkennen.

Aus den so gewonnenen Abtastwerten wird über eine einfache Signalverarbeitung die Rollerkennung durchgeführt. Diese Signalverarbeitung stützt sich auf die Auswertung der sogenannten Grundwelle und wird näher beschrieben. Die Auswertung der Grundwelle liefert eine hohe Robustheit der Anordnung gegenüber Streuungen und Alterung sowie speziellen Eigenschaften des Fahrzeugs, Rades oder Reifens wie beispielsweise mechanische Resonanzen.

Bei der vorgestellten Anordnung kann das Sensorelement insbesondere radial oder tangential, aber auch in einer Zwischenrichtung angebracht werden, d.h. es kann die auftretenden Beschleunigungen in radialer oder tangentialer Radrichtung erfassen. Die Beschleunigung kann beispielsweise über ein piezoelektrisches Element oder über einen mikromechanischen Beschleunigungssensor erfasst werden, welcher z.B. tangential angebracht ist.

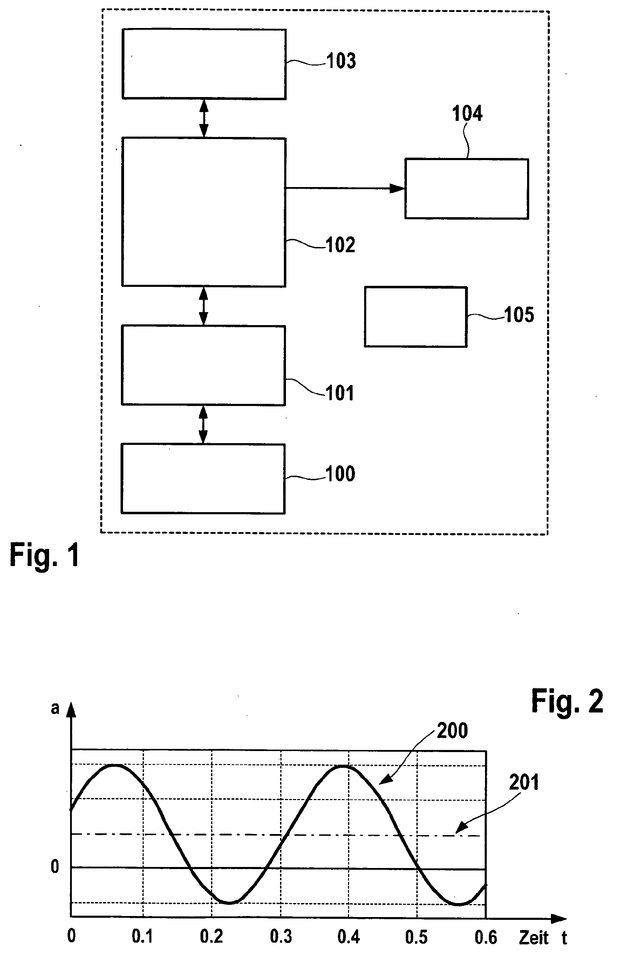

Fig. 1 zeigt in einer schematischen Darstellung denjenigen Teil eines Systems zur Reifendrucküberwachung, der sich im Rad befindet. Dieser Teil besteht aus einem Drucksensor 103, einer Auswerteschaltung 102 für die Auswertung von dessen Ausgangssignale sowie einem Sender 104. Zur Rollerkennung wird diese Anordnung durch ein oder mehrere Sensorelemente 100 ergänzt. Dabei kann sich beispielsweise um Piezokeramiken handeln, die Erfindung ist jedoch nicht auf derartige Sensorelemente beschränkt. Die Signale des bzw. der Rollerkennungssensoren werden in einer Auswerteschaltung 101 aufbereitet und ausgewertet. 105 kennzeichnet die Batterie.

Um eine hohe Robustheit bei geringen Stückkosten zu erreichen, werden möglichst viele der in Fig. 1 aufgeführten Blöcke in eine integrierte Schaltung oder in ein gemeinsames Gehäuse integriert.

Bei der Drehung des Rades entsteht sowohl in tangentialer als auch in radialer Richtung ein sinusförmiger Beschleunigungsverlauf.

In radialer Richtung ist diesem Verlauf eine (bei konstanter Drehzahl) gleichbleibende Zentrifugalbeschleunigung überlagert. Der von der Schwerkraft herrührende sinusförmige Verlauf hat eine Amplitude von 1 g (g = Erdbeschleunigung), die Frequenz entspricht der Radumdrehungsfrequenz. Die in radialer Richtung überlagerte Zentrifugalbeschleunigung kann mehrere hundert bis tausend g betragen. Deren Wert ändert sich selbst bei einem schnell beschleunigenden Fahrzeug verglichen mit der Raddrehung nur langsam.

Ein typischer Verlauf einer erfassten radialen Beschleunigung ist in Fig. 2 dargestellt. Dort ist in Abszissenrichtung die Zeit t und in Ordinatenrichtung die erfasste radiale Beschleunigung a aufgetragen. 201 kennzeichnet den von der Zentrifugalbeschleunigung herrührenden, im Laufe einer Radumdrehung konstanten oder nahezu konstanten Anteil und 200 kennzeichnet den von der Erdbeschleunigung herrührenden sinusförmigen Anteil.

Damit wandelt das Sensorelement 100 die Beschleunigung in ein sinusförmiges elektrisches Signal um. Eine gegebenenfalls vorhandene Zentrifugalbeschleunigung wird durch einen separaten Hochpass oder durch die in einem Piezoelement bereits inhärent enthaltene Hochpasseigenschaft (getrennte Ladungen gleichen sich über einen hochohmigen Widerstand im Piezoelement wieder aus) herausgefiltert.

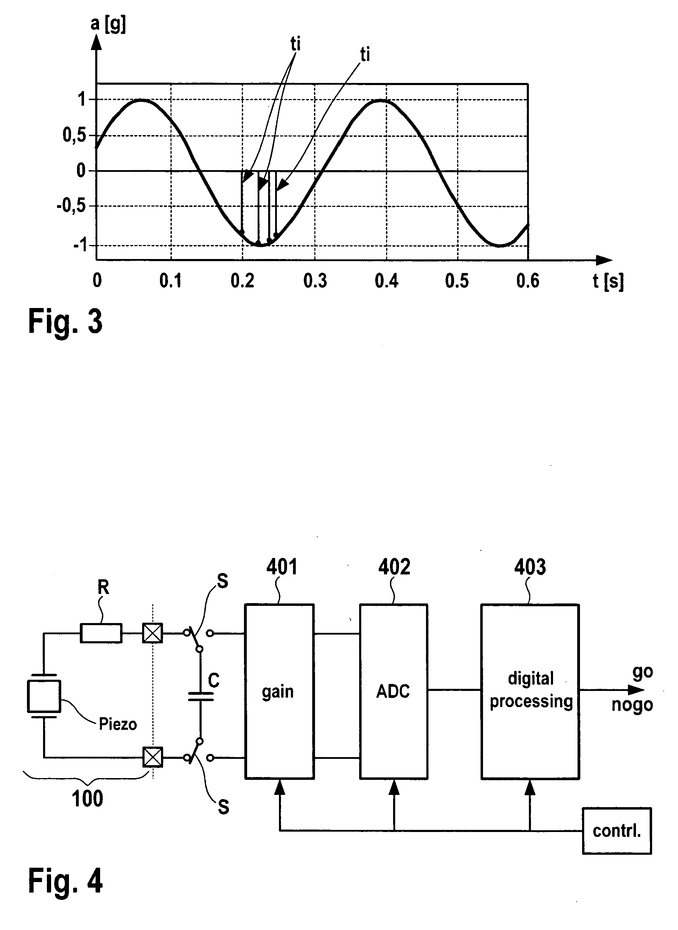

Es resultiert damit ein rein sinusförmiger Signal, wie es in Fig. 3 dargestellt ist. In Abszissenrichtung ist wie in Fig. 3 die Zeit t und in Ordinatenrichtung eine Beschleunigung a aufgetragen. In Ordinatenrichtung entspricht eine Einheit der Erdbeschleunigung g, d.h. eine Radumdrehung liefert ein sinusförmiges Ausgangssignal mit der Amplitude g.

Eine typische Realisierung der gesamten Anordnung zur Rollerkennung ist in Fig. 4 dargestellt. Soll eine Rollerkennung durchgeführt werden, dann wird das in Fig. 3 dargestellte, im Falle einer Reifenumdrehung sinusförmige Signal, zu festen Zeitpunkten ti abgetastet und einem Q/U-Wandler 401 zugeführt. Durch kurzzeitiges Umlegen der Schalter S fließt ein Teil der Ladung vom Kondensator C in den Q/U-Wandler, der diese abfließende Ladung (mit Hilfe eines Operationsverstärkers und geschalteten Kondensatoren) in eine Spannung umwandelt und verstärkt. Diese Spannung wird mit Hilfe eines Analog/Digital-Wandlers 402 in einen digitalen Zahlenwert xi umgewandelt. Im Berechnungsblock 403 wird daraus errechnet, ob ein Radstillstand ("nogo") oder ein rollendes Rad ("go") vorliegt.

Dabei werden die Abtastzeitpunkte ti, wie beispielhaft in Fig. 3 dargestellt, nichtäquidistant gewählt. Eine Möglichkeit ist, die Abstände zwischen zwei Abtastzeitpunkten immer kleiner werden zu lassen. Durch diese Nichtäquidistanz sind diese Abtastzeitpunkte zwar nicht gleichverteilt, aber dennoch fest vorgegeben. Auf diese Weise wird eine bestimmte Anzahl an Abtastzeitpunkten aufgenommen, typischerweise 5 bis 10 Werte.

Zwischen den Abtastvorgängen kann die Schaltung in einen Stand-By-Modus gebracht werden, um Energie zu sparen. Auf diese Weise wird es möglich, den Beobachtungszeitraum, d.h. das Zeitintervall in dem die Abtastwerte liegen, ohne erhöhten Energieverbrauch soweit auszudehnen, dass sich dieses Intervall typischerweise über eine komplette Periode bei der geringsten zu detektierenden Rollgeschwindigkeit erstreckt.

In Fi. 4 sind die eingezeichneten Schalter S fast die ganze Zeit in der eingezeichnete Stellung. Während dieser Zeit findet keine Auswertung der Ausgangssignale des Sensors 100 statt und die Auswerteschaltung bestehend aus den Blöcken 401, 402 und 403 ist ausgeschaltet bzw. deaktiviert bzw. in einem stromsparenden passiven Modus. Selbstverständlich liefert des Piezoelement 100 auch in diesem passiven Zustand ständig Ausgangssignale und die Spannung am Kondensator C folgt über die durch das Piezoelement, dessen internen Widerstand R sowie dem Kondensator C gegebene Übertragungsfunktion dem Beschleunigungssignal. Sobald eine Auswertung stattfinden soll, werden beide Schalter S kurzzeitig nach rechts umgelegt. Damit werden die Schalter S zu jedem Auswertezeitpunkt ti kurzzeitig umgelegt.

Die gewonnenen Abtastwerte werden vorteilhafterweise in Block 403 digital verarbeitet. Dazu wird von den Abtastwerten in einem ersten Schritt der Maximal- und Minimalwert gebildet:

$$Xmax = \max(xi)$$

und

$$Xmin = \min(xi) \; .$$

Von diesen bildet man in einem zweiten Schritt die Differenz y:

$$y = Xmax - Xmin \; .$$

Diese Differenz wird mit einer Schranke verglichen. Ist y größer als dieser Schrankenwert, dann liegt eine Rollbewegung vor, ansonsten nicht.

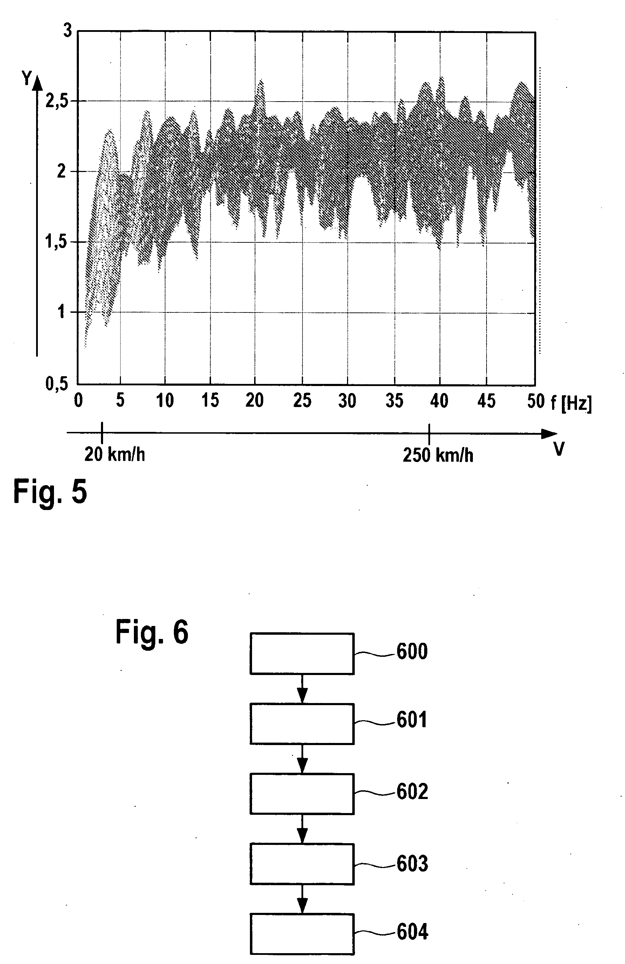

In Fig. 5 ist in Abszissenrichtung die Raddrehfrequenz f in Hz und die dazu proportionale Fahrzeuggeschwindigkeit v in km/h aufgetragen. In Ordinatenrichtung ist die Differenz y aufgetragen. Dabei ist deutlich zu erkennen, dass diese Differenz ab einer Mindestgeschwindigkeit stets größer als 1g ist. Als Schranke könnte in diesem Beispiel der Wert 0.5g verwendet werden.

Für die in Fig. 5 aufgetragenen Simulationsergebnisse wurden eine Vielzahl von Phasenlagen des Eingangssignals untersucht. Deshalb zeigt Fig. 5 nicht eine einzelne Kennlinie, sondern eine "schlauchförmige" Kurvenschar. Wichtig ist hier, dass der Minimalwert der Kurvenschar ab einer bestimmten Frequenz stets deutlich größer als ein vorgegebener Wert, z.B. 0.5 oder 1 ist.

Die Tatsache, dass in Fig. 5 auch Werte y > 2 auftreten ist durch die Art der Abtastung begründet. Bei der Abtastung wird beim kurzzeitigen Umlegen der Schalter S jeweils ein Teil der Ladung in den Q/U-Wandler, d.h. Ladungs-Spannungs-Wandler, 401 abfließen. Durch das Abfließen der Ladung ergibt sich im Spannungsverlauf am Kondensator C eine Verschiebung, welche sich mit einer sehr großen Zeitkonstanten wieder abbaut. Der Ladungsabfluss bewirkt, dass die am Kondensator C abfallende Spannung nicht mehr genau mit dem aktuellen Beschleunigungswert übereinstimmt. Findet nun bis zum nächsten Abtastwert ein Vorzeichenwechsel der Beschleunigung statt, dann kann dadurch eine Signalüberhöhung, d.h. y > 2, bewirkt werden.

Der prinzipielle Ablauf des erfindungsgemäßen Verfahrens ist in Fig. 6 dargestellt. Nach dem Start in Block 600 wird in Block 601 mittels wenigstens eines Sensorelements eine eine Radbeschleunigung kennzeichnende Radbeschleunigungsgröße a erfasst. In Block 602 wird diese Radbeschleunigungsgröße zu verschiedenen Abtastzeitpunkten ti abgetastet und in Block 603 anhand der abgetasteten Werte der Vorliegen bzw. Nichtvorliegen einer Rollbewegung detektiert. In Block 604 endet das Verfahren Dabei wird deutlich, dass eine eindeutige Erkennung einer Rollbewegung auch noch bei deutlichen Schwankungen der Sensorempfindlichkeit z.B. aufgrund von Alterung oder Temperaturveränderung möglich ist.

Neben der vorgestellten Auswertung über die Maximal- und Minimalwerte ist auch die Bildung einer oder mehrerer gewichteter Summen der Abtastwerte mit anschließendem Vergleich möglich. Ebenso sind Filterungen der Abtastwerte und

- Kombinationen mit Maximalwert und Minimalwert oder
- Medianbildung und anschließender Differenzbildung

mit Schwellwertvergleichen möglich.

Eine wichtige Eigenschaft der beschriebenen digitalen Signalauswertung ist, dass Offsets in den Abtastwerten eliminiert werden können. Diese Offsets können bereits im Signal enthalten sein, durch parasitäre Effekte der Schaltung oder durch die nachfolgende Q/U-Wandlung, Verstärkung und Analog-Digital-Wandlung hervorgerufen werden.

Schwankungen in der Empfindlichkeit des Gesamtsystems können durch geeignete Anpassung der Schranken bzw. Schwellenwerte ausgeglichen werden. Dazu kann eine Verfolgung der Signale über viele Messzyklen oder die Einspeisung von selbst erzeugten Signalwerten in den Auswertepfad eingesetzt werden. Die vorgestellte Schaltungsanordnung lässt sich prinzipiell auch in analoger Schaltungstechnik realisieren.

**Patentansprüche**

**1.** Verfahren zur Erkennung einer Rollbewegung eines Rades bei einem Kraftfahrzeug, bei dem

- mittels wenigstens eines Sensorelements (100) eine eine Radbeschleunigung kennzeichnende Radbeschleunigungsgröße (a) erfasst wird,
- die Radbeschleunigungsgröße zu verschiedenen Abtastzeitpunkten (ti) abgetastet wird und
- anhand der abgetasteten Werte das Vorliegen einer Rollbewegung detektiert wird (101), und
- die Radbeschleunigungsgröße (a) in einem wenigstens drei Abtastzeitpunkte umfassenden vorbestimmten Zyklus nichtäquidistanter Zeitpunkte (ti) abgetastet wird,
**dadurch gekennzeichnet, dass**
- der innerhalb des Zyklus erfasste

- Maximalwert (Xmax) und
- Minimalwert (Xmin)

der durch Abtastung ermittelten Radbeschleunigungsgröße (a) ermittelt wird, und
- die Differenz (y) zwischen dem Maximalwert (Xmax) und dem Minimalwert (Xmin) ermittelt wird,

wobei anhand der Differenz (y) das Vorliegen einer Rollbewegung detektiert wird.

**2.** Verfahren nach Anspruch 1, **dadurch gekennzeichnet, dass** es sich bei der Radbeschleunigungsgröße (a) um eine am Rad auftretende Radialbeschleunigung oder Tangentialbeschleunigung handelt.

**3.** Verfahren nach Anspruch 1, **dadurch gekennzeichnet, dass** die Radbeschleunigungsgröße wenigstens einen auf eine Radialbeschleunigung zurückgehenden Anteil aufweist.

**4.** Verfahren nach Anspruch 1, **dadurch gekennzeichnet, dass** die nichtäquidistanten Abtastzeitpunkte innerhalb des Zyklus (ti) zeitlich derart angeordnet sind, dass die zeitlich aufeinanderfolgenden Abstände zwischen zwei benachbarten Abtastzeitpunkten immer geringer werden.

**5.** Verfahren nach Anspruch 1, **dadurch gekennzeichnet, dass** eine Rollbewegung dann als vorliegend detektiert wird, wenn die Differenz (y) einen vorgegebenen Schwellenwert überschreitet.

**6.** Verfahren nach Anspruch 1, **dadurch gekennzeichnet, dass** der Abtastzyklus zu vorgegebenen Zeitpunkten wiederholt wird.

**7.** Verfahren nach Anspruch 1, **dadurch gekennzeichnet,**

- **dass** das Verfahren im Rahmen eines Reifendrucküberwachungssystems eingesetzt wird und
- **dass** der Betriebsmodus des Reifendrucküberwachungssystems abhängig davon ist, ob eine Rollbewegung als vorliegend detektiert wurde.

**8.** Verfahren nach Anspruch 7, **dadurch gekennzeichnet, dass** im Falle einer als nicht vorliegend detektierten Rollbewegung die vom Reifendrucküberwachungssystem ermittelten Reifendruckwerte nicht oder mit größeren Zeitabständen gesendet werden (104).

**9.** Verfahren nach Anspruch 1, **dadurch gekennzeichnet, dass** es sich bei dem Sensorelement um ein piezokeramisches Sensorelement (100) handelt.

**10.** Verfahren nach Anspruch 9, **dadurch gekennzeichnet, dass** dem piezokeramischen Sensorelement ein Kondensator (C) parallelgeschaltet ist.

**11.** Verfahren nach Anspruch 10, **dadurch gekennzeichnet,**

- **dass** die Detektion des Vorliegens einer Rollbewegung mittels einer elektronischen Schaltung (401, 402, 403) erfolgt und
- **dass** die elektronische Schaltung nur während der Abtastzeitpunkte mit Strom versorgt wird.

**12.** Verfahren nach Anspruch 11, **dadurch gekennzeichnet, dass** die elektronische Schaltung (401, 402, 403) einen Ladungs-Spannungs-Wandler (401) umfasst.

13. Verfahren nach Anspruch 1, **dadurch gekennzeichnet, dass**

   - eine Mindestgeschwindigkeit vorgegeben wird,
   - die zu der Mindestgeschwindigkeit zugehörige Periodendauer einer Radumdrehung ermittelt wird und
   - die zeitliche Länge des vorbestimmten, wenigstens drei Abtastpunkte umfassenden Zyklus gleich oder größer als die Periodendauer gewählt wird.

14. Vorrichtung mit einer Auswerteschaltung (101), die die Signale eines Sensorelements (100) zur Erfassung einer eine Radbeschleunigung kennzeichnenden Radbeschleunigungsgröße (a) auswertet, **dadurch gekennzeichnet dass** die Auswerteschaltung (101) zur Erkennung einer Rollbewegung eines Rades ausgehend von den Signalen des Sensorelements (100) alle Verfahrensschritte eines der vorstehend beschriebenen Verfahren durchführt.

**Claims**

1. Method for detecting a rolling movement of a wheel in a motor vehicle, in which

   - a wheel acceleration variable (a) which characterizes acceleration of a wheel is sensed by means of at least one sensor element (100),
   - the wheel acceleration variable is sampled at various sampling times (ti), and
   - the presence of a rolling movement is detected (101) by means of the sampled values, and
   - the wheel acceleration variable (a) is sampled in a predetermined cycle of non-equidistant times (ti) which comprises at least three sampling times,
   **characterized in that**

      - the maximum value (Xmax) and
      - the minimum value (Xmin)

   - sensed within the cycle
   of the wheel acceleration variable (a) which is determined by sampling is determined, and
   - the difference (y) between the maximum value (Xmax) and the minimum value (Xmin) is determined,

wherein the presence of a rolling movement is detected by means of the difference (y).

2. Method according to Claim 1, **characterized in that** the wheel acceleration variable (a) is a radial acceleration or tangential acceleration occurring at the wheel.

3. Method according to Claim 1, **characterized in that** the wheel acceleration variable has at least one part which is due to a radial acceleration.

4. Method according to Claim 1, **characterized in that** the non-equidistant sampling times are arranged within the cycle (ti) in terms of timing in such a way that the chronologically successive intervals between two adjacent sampling times become progressively small.

5. Method according to Claim 1, **characterized in that** the presence of a rolling movement is detected when the difference (y) exceeds a predefined threshold value.

6. Method according to Claim 1, **characterized in that** the sampling cycle is repeated at predefined times.

7. Method according to Claim 1, **characterized**

   - **in that** the method is used within the scope of a tyre-pressure-monitoring system, and
   - **in that** the operating mode of the tyre-pressure-monitoring system is dependent on whether the presence of a rolling movement has been detected.

8. Method according to Claim 7, **characterized in that** if the absence of a rolling movement has been detected, the tyre pressure values which have been determined by the tyre-pressure-monitoring system are not transmitted or are transmitted at relatively long time intervals (104).

9. Method according to Claim 1, **characterized in that** the sensor element is a piezoceramic sensor element (100).

10. Method according to Claim 9, **characterized in that** a capacitor (C) is connected in parallel with the piezoceramic sensor element.

11. Method according to Claim 10, **characterized**

   - **in that** the detection of the presence of a rolling movement is carried out by means of an electronic circuit (401, 402, 403), and
   - **in that** the electronic circuit is supplied with current only during the sampling times.

**12.** Method according to Claim 11, **characterized in that** the electronic circuit (401, 402, 403) comprises a charge/voltage converter (401).

**13.** Method according to Claim 1, **characterized in that**

- a minimum speed is predefined,
- the period length, associated with the minimum speed, of a wheel revolution is determined, and
- the chronological length of the predetermined cycle which comprises at least three sampling times is selected to be equal to or longer than the period length.

**14.** Device having an evaluation circuit (101) which evaluates the signals of a sensor element (100) in order to sense a wheel acceleration variable (a) which characterizes a wheel acceleration, **characterized in that** the evaluation circuit (101) carries out all the method steps of one of the methods described above in order to detect a rolling movement of a wheel on the basis of the signals of the sensor element (100).

**Revendications**

**1.** Procédé de détection du déplacement de roulement d'une roue d'un véhicule automobile, dans lequel une grandeur (a) d'accélération de roue qui caractérise l'accélération d'une roue est détectée au moyen d'au moins un élément de détection (100), la grandeur d'accélération de roue est échantillonnée en différents instants d'échantillonnage (ti), la présence d'un déplacement de roulement est détectée (101) à l'aide des valeurs échantillonnées et la grandeur (a) d'accélération de la roue est échantillonnée en un cycle prédéterminé d'instants (ti) non équidistants qui comprend au moins trois instants d'échantillonnage, **caractérisé en ce qu'**au cours d'un cycle, la valeur maximale détectée (Xmax) et la valeur minimale détectée (Xmin) de la grandeur (a) d'accélération de la roue déterminée par échantillonnage sont déterminées, **en ce que** la différence (y) entre la valeur maximale (Xmax) et la valeur minimale (Xmin) est déterminée et **en ce que** la présence d'un déplacement de roulement est détectée à l'aide de la différence (y).

**2.** Procédé selon la revendication 1, **caractérisé en ce que** la grandeur (a) d'accélération de la roue est une accélération radiale ou une accélération tangentielle de la roue.

**3.** Procédé selon la revendication 1, **caractérisé en ce que** la grandeur d'accélération de la roue présente au moins une composante qui renvoie à une accélération radiale.

**4.** Procédé selon la revendication 1, **caractérisé en ce que** les instants d'échantillonnage (ti) non équidistants du cycle sont agencés dans le temps de telle sorte que les écarts temporels successifs entre deux instants d'échantillonnage voisins soient de plus en plus courts.

**5.** Procédé selon la revendication 1, **caractérisé en ce que** la présence d'un déplacement de roulement est détectée si la différence (y) dépasse une valeur de seuil prédéterminée.

**6.** Procédé selon la revendication 1, **caractérisé en ce que** le cycle d'échantillonnage est répété en des instants prédéterminés.

**7.** Procédé selon la revendication 1, **caractérisé en ce que** le procédé est utilisé dans le cadre d'un système de surveillance de la pression de bandage de roue et **en ce que** le mode de fonctionnement du système de surveillance de la pression de bandage de roue est différent selon que la présence d'un déplacement de roulement a été détectée ou non.

**8.** Procédé selon la revendication 7, **caractérisé en ce qu'**au cas où la présence d'un déplacement de roulement n'a pas été détectée, les valeurs de pression de bandage de roue déterminées par le système de surveillance de pression de bandage de roue ne sont pas envoyées ou sont envoyées à des intervalles plus grands (104).

**9.** Procédé selon la revendication 1, **caractérisé en ce que** l'élément de détection est un élément céramique de détection (100).

**10.** Procédé selon la revendication 9, **caractérisé en ce qu'**un condensateur (C) est raccordé en parallèle à l'élément piézocéramique de détection.

**11.** Procédé selon la revendication 10, **caractérisé en ce que** la détection de la présence d'un déplacement de roulement s'effectue au moyen d'un circuit électronique (401, 402, 403) et **en ce que** le circuit électronique n'est alimenté en courant que pendant les instants d'échantillonnage.

**12.** Procédé selon la revendication 11, **caractérisé en ce que** le circuit électronique (401, 402, 403) comprend un convertisseur charge-tension (401).

**13.** Procédé selon la revendication 1, **caractérisé en ce qu'**il détermine une vitesse minimale, **en ce que** la durée d'un tour de roue associée à la vitesse minimale est déterminée et **en ce que** la durée du cycle prédéterminé qui comprend au moins trois points d'échantillonnage sélectionnée est égale ou supérieure à la durée d'un tour de roue.

14. Dispositif doté d'un circuit d'évaluation (101) qui évalue les signaux d'un élément de détection (100) qui saisit une grandeur (a) d'accélération de roue qui caractérise l'accélération d'une roue,
**caractérisé en ce que**
pour détecter un déplacement de roulement d'une roue, le circuit d'évaluation (101) exécute sur la base des signaux de l'élément de détection (100) toutes les étapes d'un des procédés décrits plus haut.

**Fig. 1**

**Fig. 2**

**Fig. 3**

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002240 A1
- DE 19753971 A1

- US 20050156722 A1
- DE 102004042191 B3